# EUROPÄISCHE PATENTSCHRIFT

(11) **EP 1 329 348 B1**
(45) Veröffentlichungstag und Bekanntmachung des Hinweises auf die Patenterteilung: **28.02.2007**
(21) Anmeldenummer: 03000167.1
(22) Anmeldetag: 07.01.2003
(51) Int. Cl.: B60J 1/18

(54) **Faltverdeck mit Heckscheibe für ein Cabriolet-Fahrzeug**
Folding roof with rear window for a convertible vehicle
Toit pliable avec lunette arrière pour un véhicule convertible

(30) Priorität: 19.01.2002 DE 10201927
(43) Veröffentlichungstag der Anmeldung: 23.07.2003
(73) Patentinhaber: Wilhelm Karmann GmbH, 49084 Osnabrück (DE)
(72) Erfinder: Werries, Heinz, 49143 Bissendorf (DE); Diestelkämper, Thomas, 49124 Georgsmarienhütte (DE)

(56) Entgegenhaltungen:
- US-A- 3 385 629
- US-A- 4 693 509
- US-A- 4 784 428

## Beschreibung

Die Erfindung betrifft ein Faltverdeck für ein Cabriolet-Fahrzeug mit einer formstabilen Heckscheibe, die in einem Verdeckbezug zwischen einem Eckspriegel und einem relativ zu diesem beweglich angelenkten Stoffhaltebügel gehalten ist, und mit einenends an dem Eckspriegel und anderenends an dem Stoffhaltebügel fixierten Zugmittel, wie es aus der DE 41 29 493 C1 bekannt ist.

Bei einer derartigen Konstruktion besteht während der Öffnungs- bzw. Verdeckablagebewegung die Schwierigkeit, daß die durch den Verdeckbezug zwischen benachbarten Spriegeln bzw. zwischen Eckspriegel und Stoffhaltebügel gehaltene Heckscheibe aufgrund der nachlassenden Spannung des Bezugs in eine unkontrollierte Position relativ zu den Verdeckteilen gelangen kann, auch aufgrund ihres Eigengewichts, in der sie mit unbeweglichen Karosserieteilen kollidiert bzw. diese streift.

Zur Lösung dieses Problems ist in der DE 41 29 493 C1 vorgeschlagen worden, die Heckscheibe über Gurtbänder mit Spriegeln des Verdecks zu verbinden. Die Gurtbänder bewirken eine definierte Ablage der Heckscheibe während der Verdecköffnungsbewegung derart, daß die Heckscheibe während der Dachablagebewegung eine Rückwärtsverlagerung erfährt, damit sie nicht mit Karosserieteilen kollidiert. Als nachteilig ist hierbei die aufwendige Anbindung mit hohem Montageaufwand anzusehen sowie die Tatsache, daß die Gurtbänder nicht in jeder Verdeckposition eine definierte Lage aufweisen und insbesondere im geschlossenen Zustand durchhängen.

Ferner ist aus der US-4 784 428 ein Faltverdeck mit einer in Verdeckstoff eingefaßten Heckscheibe aus Festglas bekannt, die über verschiedene Steuerhebel mit dem Verdeckgestell verbunden ist, so daß eine Zwangssteuerung während der Verdeckablagebewegung erreicht wird. Nachteilig sind eine aufwendige Mechanik mit hohem Gewicht sowie Probleme aufgrund der zusätzlichen Hebel.

Die Aufgabe der Erfindung besteht darin, ein gattungsgemäßes Faltverdeck im Hinblick auf die einleitend umrissene Problematik dahingehend weiterzuentwickeln, daß eine konstruktiv einfache und optisch ansprechende bzw. unauffällige Bewegungsführung für die Heckscheibe geschaffen wird, damit diese bei der Ablagebewegung nicht mit Karosserieteilen wie bspw. der Rückwand der Verdeckwanne oder den hinteren Kopfstützen kollidiert.

Diese Aufgabe wird bei einem gattungsgemäßen Faltverdeck erfindungsgemäß dadurch gelöst, daß das Zugmittel mit einem Abstützelement an der Heckscheibe abgestützt ist, wobei auf dem Zugmittel ein mit dem Abstützelement zusammenwirkendes Mitnehmerelement fixiert ist und das Zugmittel zwischen dem Abstützelement und dem Stoffhaltebügel elastisch vorgespannt ist.

Es kann vorgesehen sein, daß das Zugmittel durch das Abstützelement mit Abstand zu der Heckscheibe an dieser abgestützt ist.

Das Abstützelement kann ein mit der Heckscheibe verbundener Abstützbügel sein, der an einem freien Endabschnitt mit einer Führungsöffnung zur Aufnahme für das Zugmittel versehen ist. Hierbei kann vorgesehen sein, daß das Zugmittel in einer rohrförmigen Aufnahme geführt ist.

Das Mitnehmerelement kann in einem zwischen Abstützelement und Eckspriegel befindlichen Bereich des Zugmittels angebracht sein.

Das Zugmittel kann ein elastisches Element aufweisen, insbesondere eine Zugfeder. Im übrigen kann das Zugmittel aus einem strangförmigen, dehnungsarmen Material bestehen, insbesondere aus einem Kabel oder Seil, z.B. Stahlseil.

Zweckmäßigerweise ist das Mitnehmerelement ein auf dem Zugmittel, insbesondere einem Stahlseil, fixierter Formkörper, insbesondere eine Kugel.

Bevorzugt ist das Zugmittel an seinen Enden an Stoffhaltebügel und/oder Eckspriegel durch auf dem Zugmittel fixierte Befestigungselemente gehalten. In Weiterbildung dieses Grundgedankens kann vorgesehen sein, daß das Zugmittel als Seil ausgebildet ist, das durch ein eine Durchgangsbohrung aufweisendes Klemmelement geführt ist und an einem Ende eine Verdickung aufweist, wobei das Klemmelement eine der Verdickung entsprechende Formausnehmung aufweist und in einer Bohrung am Verdeck formschlüssig aufnehmbar ist, so daß das Zugmittel endseitig fixiert ist.

Bevorzugt ist vorgesehen, daß an beiden seitlichen Rändern der Heckscheibe jeweils ein Zugmittel angeordnet ist. Das Abstützelement kann im vorderen bzw. oberen Bereich der Heckscheibe angeordnet sein.

In Weiterbildung der Erfindung kann vorgesehen sein, daß das Abstützelement zur Beeinflussung des Strackverlaufs des Verdecks einstellbar ist. Ferner kann vorgesehen sein, daß die Länge des Zugmittels und/oder die Elastizität eines in diesem angeordneten elastischen Elements einstellbar ist.

Die Erfindung wird nachfolgend anhand eines Ausführungsbeispiels erläutert, wobei auf eine Zeichnung Bezug genommen ist, in der
Fig. 1 eine schematische perspektivische Ansicht eines Cabriolets-Fahrzeugs mit einem mit einer formstabilen Heckscheibe versehenen, zu öffnenden Faltverdeck zeigt;
Fig. 2 eine ausschnittsweise, schematische Innenansicht eines Teils von Faltverdeck und Heckscheibe mit einem erfindungsgemäßen Zugmittel zeigt,
Fig. 3 einen Teilbereich aus Fig. 2 um einen Abstützbügel in vergrößertem Maßstab und teilweise im Schnitt zeigt,
Fig. 4 eine schematische seitliche Schnittansicht des Faltverdecks im Bereich der Heckscheibe zeigt, und
Fig. 5 eine Einzelheit aus Fig. 4 in vergrößertem Maßstab zeigt.

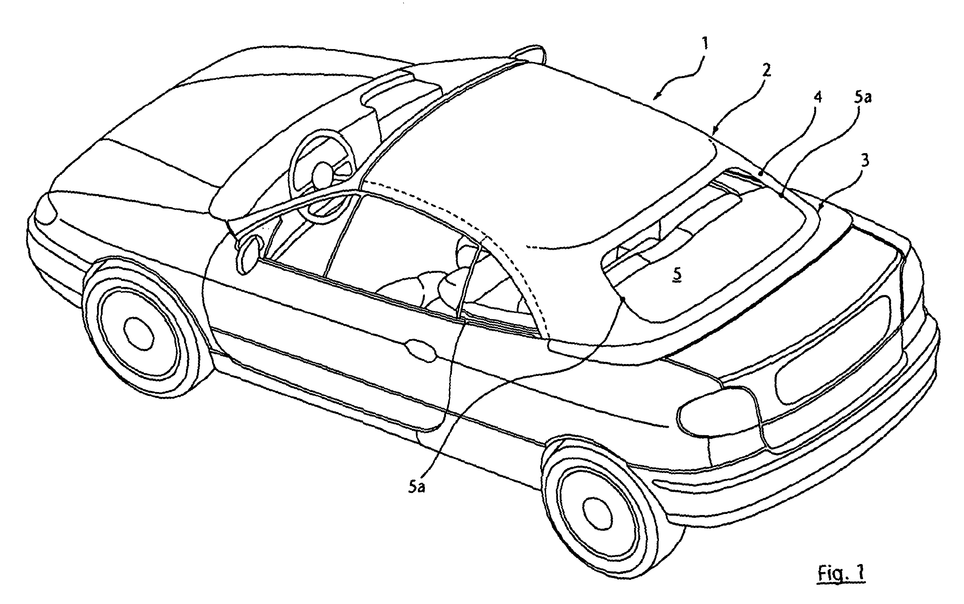

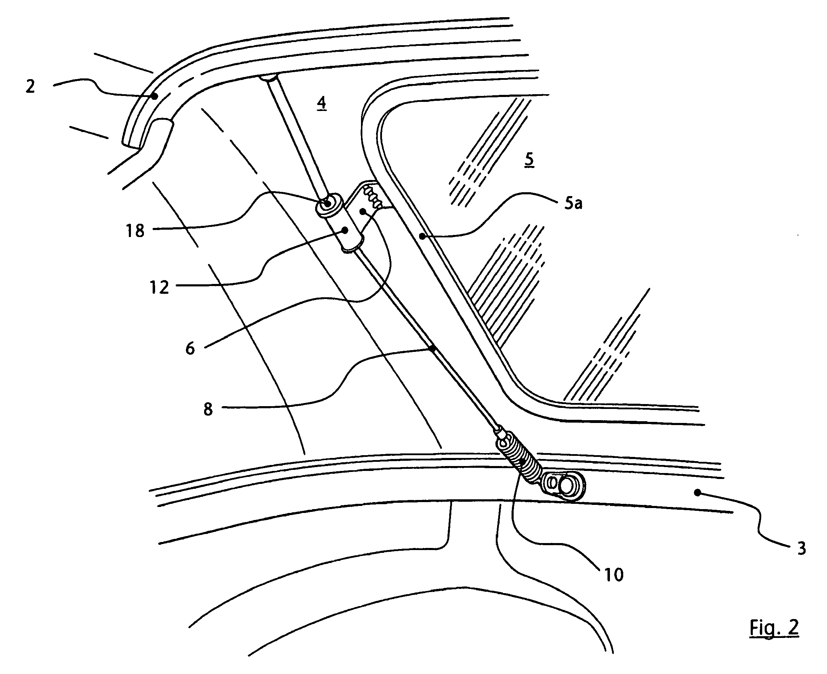

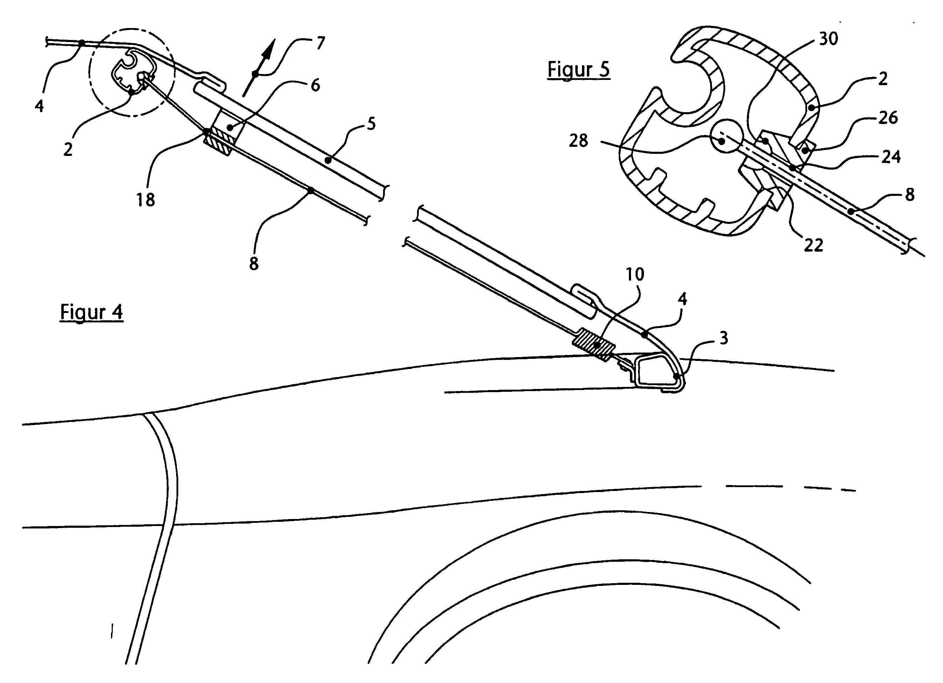

Fig. 1 zeigt eine schematische perspektivische Darstellung eines Cabriolet-Fahrzeugs mit einem im ganzen mit 1 bezeichneten, zu öffnenden und zu schließenden Faltverdecks mit einem Eckspriegel 2 und einem Stoffhaltebügel 3 (Fig. 2, 4), die in Fig. 1 lediglich anhand des Konturverlaufs des Verdecks erkennbar sind. Das Faltverdeck besteht aus einem nicht im einzelnen dargestellten Verdeckgestell, das mit einem Verdeckbezug 4 überspannt ist, der im Heckbereich einen Ausschnitt für eine Heckscheibe 5 aus Festglas besitzt, wobei die Heckscheibe durch einen Hochfrequenz-Schweißvorgang unmittelbar an den Verdeckbezug angebunden ist.

Fig. 2 zeigt eine schematische Innenansicht eines Teils des Faltverdecks in einem seitlichen Randbereich der Heckscheibe 5. Ein im seitlichen, oberen Randbereich der Heckscheibe 5 angebrachter Abstützbügel 6 dient zur Führung eines Seils 8, das mit seinen Enden einerseits am Eckspriegel 2 und andererseits unter Zwischenschaltung einer Zugfeder 10 am Stoffhaltebügel 3 fixiert ist. Wie Fig. 2 und 4 zeigen, verläuft das Seil 8 zwischen den beiderseitigen Fixierungspunkten an Eckspriegel und Stoffhaltebügel nicht geradlinig, sondern zur Heckscheibe 5 konkav, so daß es unter Spannung eine senkrecht zur Heckscheibenebene nach außen bzw. schräg nach oben gerichtete Kraft (Pfeil 7 in Fig. 4) auf die Heckscheibe ausübt.

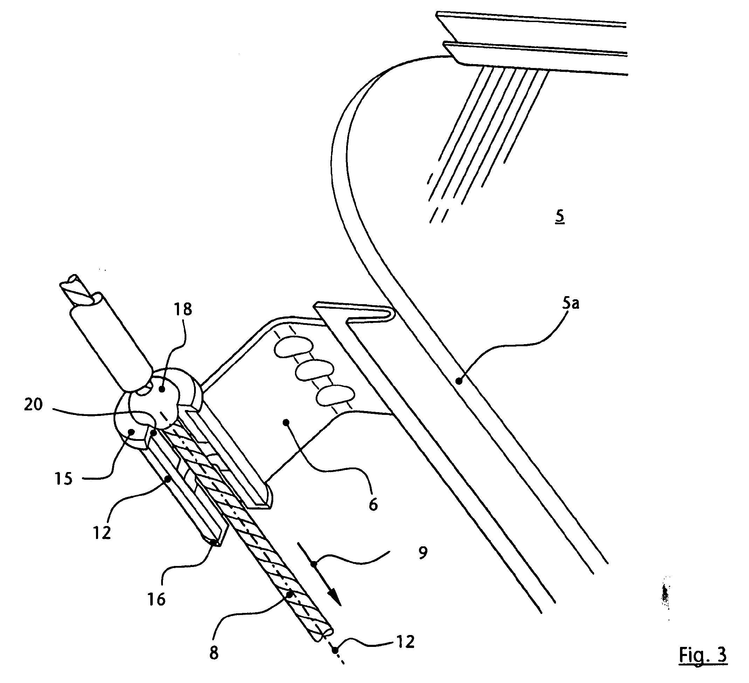

Fig. 3 zeigt eine vergrößerte Ansicht eines Teils von Fig. 2 im Bereich des Abstützbügels 6, teilweise im Schnitt, woraus deutlich wird, daß der Abstützbügel 6 an seinem von der Heckscheibe 5 wegweisenden freien Ende eine rohrförmige Aufnahme 12 besitzt, deren Längsachse 12a im wesentlichen parallel zu einem seitlichen Rand 5a der Heckscheibe 5 verläuft. Wie Fig. 3 weiter zeigt, sind in die rohrförmige Aufnahme 12 des Abstützbügels 6 Führungselemente 15, 16 eingesetzt, die eine geräusch- und reibungsarme Führung des Seils 8 sicherstellen.

Auf dem Seil 8 ist ein Mitnehmerelement in Form einer Kugel 18 fixiert, die gegen eine entsprechend geformte Ausnehmung 20 in dem Führungselement 5 zur Anlage kommt, wenn eine entsprechende Zugkraft (Pfeil 9) auf das Seil 8 wirkt.

Fig. 4 zeigt die gesamte Anordnung in einer schematischen seitlichen Schnittansicht, aus der insbesondere die gegen die Heckscheibe abgestützte Umlenkung bzw. nicht geradlinige Führung des Seils 8 sowie dessen endseitige Befestigungen erkennbar sind. Fig. 5 zeigt eine vergrößerte Detailansicht der Befestigung des Seils an dem Eckspriegel 2, die grundsätzlich in herkömmlicher bzw. beliebiger Art und Weise erfolgen kann, bspw. durch Nieten oder Schrauben, vorliegend allerdings montagetechnisch besonders vorteilhaft ausgeführt wurde. In eine Bohrung 22 des als Hohlprofil ausgebildeten Eckspriegels 2 ist ein eine Durchgangsbohrung 24 aufweisendes Klemmelement 26 eingesetzt, in das vorab das Seil 8 eingefädelt wurde, wobei am Ende des Seils eine Verdickung in Form einer darauf fixierten Kugel 28 ausgebildet ist. Das Klemmelement 26 weist eine der Kugel 28 entsprechende Aufnahmeausnehmung 30 auf, in die die Kugel 28 eingreift, sobald ein Zug auf das Seil ausgeübt wird, so daß das Ende des Seils fest in dem Eckspriegel 2 gehalten ist. Aufgrund der Spreizwirkung der Kugel 28 bzw. einer in sonstiger Weise ausgebildeten Verdickung ergibt sich ein großes Widerstandsvermögen gegen Ausreißen des Klemmelements 26 aus der Bohrung 22.

Die Zugfeder 10 verleiht dem Seil 8 eine gewisse Längenvariabilität, so daß das Seil zwischen Abstützbügel und Stoffhaltebügel stets gespannt ist. Außerdem ist die Länge des Seils zwischen Abstützbügel und Eckspriegel so bemessen, daß das Seil bei geschlossenem Verdeck auch in diesem Bereich gespannt ist. Dadurch wird die Heckscheibe in Richtung Fahrzeugaußenseite gedrückt (Pfeil 7), so daß nicht nur ein Durchhängen in Richtung auf das Fahrzeuginnere aufgrund der Gewichtskraft der Heckscheibe vermieden wird, sondern auch der Strackverlauf des Dachs (Außenhautkontur) dahingehend positiv beeinflußt wird, daß die Heckscheibe leicht aus dem Verdeck nach außen gedrückt wird, was sich günstig auf das Design auswirkt. Durch verschiedene Winkelstellungen, Abmessungen oder Anbringungsorte des Abstüzbügels 6 kann der Strackverlauf individuell für jedes Verdeck oder jeden Verdecktyp eingestellt werden.

Weiterhin wird während der Bewegungsphase des Daches (Öffnen bzw. Schließen) mit dem Aufstellen des Stoffhaltebügels in eine annähernd senkrechte Stellung und der mit dem Eckspriegel gemeinsamen Ablage in einen Verdeckablageraum die Kugel 18 durch die Zugfeder gegen die Aufnahme 12 des Abstützbügels 6 gedrückt, so daß trotz nachlassender Stoffspannung die Heckscheibe stets in Richtung auf den Stoffhaltebügel gezogen wird. Dadurch wird während der Dachablagebewegung gewährleistet, daß die Heckscheibe über Karosseriekanten des Verdeckaufnahmeraums (Rückwand der Verdeckwanne sowie hintere Kopfstützen) mit einem Mindestabstand hinweggeführt wird und keine Kollision auftritt. Beschädigungen an Verdeckstoff, Himmel sowie Heckscheibe werden dadurch vermieden.

### Bezugszeichenliste

- 1: Faltverdeck
- 2: Eckspriegel
- 3: Stoffhaltebügel
- 4: Verdeckbezug
- 5: Heckscheibe
- 5a: seitlicher Rand
- 6: Abstützbügel
- 7: Pfeil
- 8: Seil
- 9: Pfeil
- 10: Zugfeder
- 12: Aufnahme
- 12a: Längsachse
- 15, 16: Führungselement
- 18: Kugel
- 20: Ausnehmung (in 15)
- 22: Bohrung (in 2)
- 24: Durchgangsbohrung (in 26)
- 26: Klemmelement
- 28: Kugel
- 30: Aufnahmeausnehmung

## Patentansprüche

1. Faltverdeck (1) für ein Cabriolet-Fahrzeug mit einer formstabilen Heckscheibe (5), die in einem Verdeckbezug (4) zwischen einem Eckspriegel (2) und einem relativ zu diesem beweglich angelenkten Stoffhaltebügel (3) gehalten ist, und mit einem einenends an dem Eckspriegel (2) und anderenends an dem Stoffhaltebügel (3) fixierten Zugmittel (8), **dadurch gekennzeichnet, daß** das Zugmittel (8) mit einem Abstützelement (6) an der Heckscheibe (5) abgestützt ist, wobei auf dem Zugmittel (8) ein mit dem Abstützelement (6) zusammenwirkendes Mitnehmerelement (18) fixiert ist und das Zugmittel (8) zwischen dem Abstützelement (6) und dem Stoffhaltebügel (3) elastisch vorgespannt ist.

2. Faltverdeck nach Anspruch 1, **dadurch gekennzeichnet, daß** das Zugmittel (8) durch das Abstützelement (6) mit Abstand zu der Heckscheibe (5) an dieser abgestützt ist.

3. Faltverdeck nach Anspruch 2, **dadurch gekennzeichnet, daß** das Abstützelement ein mit der Heckscheibe verbundener Abstützbügel (6) ist, der an einem freien Endabschnitt mit einer Aufnahme (12) für das Zugmittel (8) versehen ist.

4. Faltverdeck nach Anspruch 3, **dadurch gekennzeichnet, daß** das Zugmittel (8) in einer rohrförmigen Aufnahme (12) geführt ist.

5. Faltverdeck nach Anspruch 4, **dadurch gekennzeichnet, daß** das Mitnehmerelement (18) in einem zwischen Abstützelement (6) und Eckspriegel (2) befindlichen Bereich des Zugmittels (8) angebracht ist.

6. Faltverdeck nach einem der vorangehenden Ansprüche, **dadurch gekennzeichnet, daß** das Zugmittel (8) ein elastisches Element, insbesondere eine Zugfeder (10), aufweist.

7. Faltverdeck nach Anspruch 6, **dadurch gekennzeichnet, daß** das Zugmittel (8) im übrigen aus einem band- oder strangförmigen, dehnungsarmen Material besteht.

8. Faltverdeck nach Anspruch 7, **dadurch gekennzeichnet, daß** das Zugmittel aus einem Kabel oder Seil (8), insbesondere Stahlseil, besteht.

9. Faltverdeck nach einem der Ansprüche 5 bis 8, **dadurch gekennzeichnet, daß** das Mitnehmerelement ein auf dem Zugmittel (8) fixierter Formkörper, insbesondere eine Kugel (18), ist.

10. Faltverdeck nach einem der vorangehenden Ansprüche, **dadurch gekennzeichnet, daß** das Zugmittel (8) an seinen Enden an Stoffhaltebügel (3) und/oder Eckspriegel (2) durch auf dem Zugmittel fixierte Befestigungselemente (28) gehalten ist.

11. Faltverdeck nach Anspruch 10, **dadurch gekennzeichnet, daß** das Zugmittel als Seil (8) ausgebildet ist, das durch ein eine Durchgangsbohrung (24) aufweisendes Klemmelement (26) geführt ist und an einem Ende eine Verdickung (28) aufweist, wobei das Klemmelement (26) eine der Verdickung (28) entsprechende Aufnahmeausnehmung (30) aufweist und in einer Bohrung (22) formschlüssig aufnehmbar ist, so daß das Zugmittel (8) endseitig fixiert ist.

12. Faltverdeck nach einem der vorangehenden Ansprüche, **dadurch gekennzeichnet, daß** an beiden seitlichen Rändern (5a) der Heckscheibe (5) jeweils ein Zugmittel (8) angeordnet ist.

13. Faltverdeck nach einem der vorangehenden Ansprüche, **dadurch gekennzeichnet, daß** das Abstützelement (6) im vorderen bzw. oberen Bereich der Heckscheibe (5) angeordnet ist.

14. Faltverdeck nach einem der vorangehenden Ansprüche, **dadurch gekennzeichnet, daß** das Abstützelement (6) zur Beeinflussung des Strackverlaufs des Verdecks einstellbar ist.

15. Faltverdeck nach einem der vorangehenden Ansprüche, **dadurch gekennzeichnet, daß** die Länge des Zugmittels (8) und/oder die Elastizität eines in diesem angeordneten elastischen Elements (10) einstellbar ist.

## Claims

1. A folding soft-top (1) for a cabriolet vehicle with a dimensionally stable rear window (5) which is held in a soft-top cover (4) between a corner bow (2) and a material holding bracket (3) which is linked in a movable manner relative thereto, and with a traction means (8) which is fixed at one end to the corner bow (2) and at the other end to the material holding bracket (3), **characterised in that** the traction means (8) is supported at the rear window by means of a support element (6), whereby a driver element (18) which co-operates with the support element (6) is fixed onto the traction means (8), and the traction means (8) is biased in an elastic manner between the support element (6) and the material holding bracket (3).

2. The folding soft-top according to Claim 1, **characterised in that** the traction means (8) is supported at the rear window (5) in such a manner as to be spaced apart from it, by means of the support element (6).

3. The folding soft-top according to Claim 2, **characterised in that** the support element is a support bracket (6) which is connected to the rear window, which support bracket (6) is provided, at a free end portion, with a receiver (12) for the traction means (8).

4. The folding soft-top according to Claim 3, **characterised in that** the traction means (8) is guided in a tubular receiver (12).

5. The folding soft-top according to Claim 4, **characterised in that** the driver element (18) is attached in an area of the traction means (8) which is located between the support element (6) and the corner bow (2).

6. The folding soft-top according to one of the preceding claims, **characterised in that** the traction means (8) has an elastic element, in particular a tension spring (10).

7. The folding soft-top according to Claim 6, **characterised in that** the traction means (8) further consists of a low-expansion band or string-form material.

8. The folding soft-top according to Claim 7, **characterised in that** the traction means consists of a cable or wire (8), In particular a steel wire.

9. The folding soft-top according to Claims 5 to 8, **characterised in that** the driver element is a formed body which can be fixed onto the traction means (8), in particular a ball (18).

10. The folding soft-top according to one of the preceding claims, **characterised in that** the traction means (8) is held, at its ends, at material holding brackets (3) and/or corner bows (2) by means of securing elements (28) fixed onto the traction means.

11. The folding soft-top according to Claim 10, **characterised in that** the traction means is formed as a wire (8) which is guided through a clamping element having a passage bore (24) and which has a thickening (28) at one end, whereby the clamping element (26) has a receiving recess (30) corresponding to the thickening, and is able to be received in a bore (22) in a form-fitting manner, such that the traction means (8) is fixed at the end side.

12. The folding soft-top according to one of the preceding claims, **characterised in that**, at each of the two side edges (5a) of the rear window (5), a traction means (8) is arranged.

13. The folding soft-top according to one of the preceding claims, **characterised in that** the support element (6) is arranged in the front and/or upper area of the rear window (5).

14. The folding soft-top according to one of the preceding claims, **characterised in that** the support element (6) is adjustable in order to influence the straight course of the soft-top.

15. The folding soft-top according to one of the preceding claims, **characterised in that** the length of the traction means (8) and/or the elasticity of an elastic element (10) arranged therein is adjustable.

## Revendications

1. Capote pliante (1) pour un véhicule cabriolet comprenant une lunette arrière de forme stable (5), qui est maintenue dans un revêtement de capote (4) entre un arceau de coin (2) et un étrier de retenue (3) articulé de manière mobile par rapport à celui-ci, et comprenant un tirant (8) fixé à une extrémité à l'arceau de coin (2) et à l'autre extrémité à l'étrier de retenue (3), **caractérisée en ce que** le tirant (8) est supporté par un élément de support (6) sur la lunette arrière (5), un élément d'entraînement (18) coopérant avec l'élément de support (6) étant fixé sur le tirant (8) et le tirant (8) étant précontraint élastiquement entre l'élément de support (6) et l'étrier de retenue (3).

2. Capote pliante selon la revendication 1, **caractérisée en ce que** le tirant (8) est supporté par l'élément de support (6) à distance de la lunette arrière (5) contre celle-ci.

3. Capote pliante selon la revendication 2, **caractérisée en ce que** l'élément de support est un étrier de support (6) connecté à la lunette arrière, qui est muni à une portion d'extrémité libre d'un logement (12) pour le tirant (8).

4. Capote pliante selon la revendication 3, **caractérisée en ce que** le tirant (8) est guidé dans un logement tubulaire (12).

5. Capote pliante selon la revendication 4, **caractérisée en ce que** l'élément d'entraînement (18) est monté dans une région du tirant (8) située entre l'élément de support (6) et l'arceau de coin (2).

6. Capote pliante selon l'une quelconque des revendications précédentes, **caractérisée en ce que** le tirant (8) présente un élément élastique, notamment un ressort de traction (10).

7. Capote pliante selon la revendication 6, **caractérisée en ce que** le tirant (8) se compose par ailleurs d'un matériau en forme de bande ou de section de faible étirement.

8. Capote pliante selon la revendication 7, **caractérisée en ce que** le tirant se compose d'un câble ou d'un toron (8), notamment d'un câble d'acier.

9. Capote pliante selon l'une quelconque des revendications 5 à 8, **caractérisée en ce que** l'élément d'entraînement est un corps moulé fixé sur le tirant (8), notamment une rotule (18).

10. Capote pliante selon l'une quelconque des revendications précédentes, **caractérisée en ce que** le tirant (8) est maintenu à ses extrémités sur l'étrier de retenue (3) et/ou l'arceau de coin (2) par des éléments de fixation (28) fixés sur le tirant.

11. Capote pliante selon la revendication 10, **caractérisée en ce que** le tirant est réalisé sous forme de câble (8) qui est guidé à travers un élément de serrage (26) présentant un alésage traversant (24), et présente à une extrémité un épaississement (28), l'élément de serrage (26) présentant un évidement de logement (30) correspondant à l'épaississement (28) et pouvant être reçu par engagement positif dans un alésage (22) de sorte que le tirant (8) soit fixé du côté de son extrémité.

12. Capote pliante selon l'une quelconque des revendications précédentes, **caractérisée en ce qu'**un tirant (8) respectif est disposé sur chacun des deux bords latéraux (5a) de la lunette arrière (5).

13. Capote pliante selon l'une quelconque des revendications précédentes, **caractérisée en ce que** l'élément de support (6) est disposé dans la région avant ou supérieure de la lunette arrière (5).

14. Capote pliante selon l'une quelconque des revendications précédentes, **caractérisée en ce que** l'élément de support (6) peut être ajusté pour influencer l'étirement de la capote.

15. Capote pliante selon l'une quelconque des revendications précédentes, **caractérisée en ce que** la longueur du tirant (8) et/ou l'élasticité d'un élément élastique (10) disposé dans celle-ci est ajustable.
